# EUROPEAN PATENT APPLICATION

(11) **EP 2 451 222 A1**
(43) Date of publication of application: **09.05.2012**
(21) Application number: 11008874.7
(22) Date of filing: 08.11.2011
(51) Int. Cl.: H04W 52/14, H04W 52/36

(54) **Method of handling power headroom reporting for activated serving cell with configured uplink**

(30) Priority: 08.11.2010 US 410945 P
(71) Applicant: HTC Corporation, Taoyuan County 330 (TW)
(72) Inventor: Kone, Mamadou, Taoyuan City Taoyuan County 330 (TW)
(74) Representative: Carstens, Dirk Wilhelm

(57) **Abstract**

A method of handling power headroom reporting for activated serving cell with configured uplink, for a communication device in a wireless communication system is disclosed. The method comprises triggering a power headroom report for each activated serving cell with configured uplink when an activated serving with configured uplink is deactivated or removed.

## Description

### Cross Reference To Related Applications

This application claims the benefit of U.S. Provisional Application No. 61/410,945, filed on November 8, 2010 and entitled "Methods for triggering PHR for each activated Serving Cell with configured uplink after deactivation or removal of an activated SCell with configured uplink", the contents of which are incorporated herein in their entirety.

### Background of the Invention

### 1. Field of the Invention

The application relates to a method utilized in a wireless communication system, and more particularly, to a method of handling power headroom reporting for an activated serving cell with configured uplink in a wireless communication system.

### 2. Description of the Prior Art

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B (NB) alone rather than in NB and RNC (Radio Network Controller) respectively, so that the system structure becomes simple.

Power headroom reporting (PHR) procedure is to provide the serving eNB with information about the difference between the maximum UE transmission (TX) power and an estimated TX power for Uplink Share Channel (UL-SCH). With power headroom information sent by the UE, the network can allocate radio resource to the UE and make schedule decision more efficiently.

Toward advanced high-speed wireless communication system, such as transmitting data in a higher peak data rate, LTE-Advanced system is standardized by the 3rd Generation Partnership Project (3GPP) as an enhancement of LTE system. LTE-Advanced system targets faster switching between power states, improves performance at the cell edge, and includes subjects, such as bandwidth extension, coordinated multipoint transmission/reception (COMP), uplink multiple input multiple output (MIMO), etc.

For bandwidth extension, carrier aggregation (CA) is introduced to the LTE-Advanced system for extension to wider bandwidth, where two or more component carriers are aggregated, for supporting wider transmission bandwidths (for example up to 100MHz) and for spectrum aggregation. According to carrier aggregation capability, multiple component carriers are aggregated into overall wider bandwidth, where the UE can establish multiple links corresponding to the multiple (downlink and uplink) component carriers for simultaneously receiving and transmitting.

In carrier aggregation, the UE only has one RRC connection with the network. At RRC connection establishment/re-establishment/handover, one serving cell provides the NAS mobility information, and at RRC connection re-establishment/handover, one serving cell provides the security input. This cell is referred to as a Primary serving cell (PCell). In the downlink, the carrier corresponding to the PCell is the Downlink Primary Component Carrier (DL PCC) while in the uplink it is the Uplink Primary Component Carrier (UL PCC). In addition, cells other than the PCell are named secondary serving cell (SCell).

It is possible to configure a UE to aggregate a different number of CCs originating from the same eNB and of possibly different bandwidths in the UL and the DL. Note that, the number of DL CCs that can be configured depends on the DL aggregation capability of the UE, the number of UL CCs that can be configured depends on the UL aggregation capability of the UE, it is not possible to configure a UE with more UL CCs than DL CCs, and in typical TDD deployments, the number of CCs and the bandwidth of each CC in UL and DL is the same. In addition, the PCell is always configured with DL PCC and UL PCC, whereas the SCell can be configured only with DL SCC.

Moreover, the PCC (e.g. the UL and DL PCC) is always activated, whereas the SCC (e.g. UL and DL SCC) is activated or deactivated according to specific conditions (e.g. an amount of data for transmission). The term "activation" means that transmission or reception of traffic data is performed or traffic data is ready for its transmission or reception. On the other hand, the term "deactivation" means that transmission or reception of traffic data is not permitted.

According to 3GPP specification R2-105960, a power headroom report shall be triggered for each activated serving cell with configured uplink (e.g. uplink component carrier) upon activation of a SCell with configured uplink. In other words, the power headroom report is triggered for each activated serving cell with configured uplink every time that a SCell is activated with configured uplink. This is supposed to help the eNB to know the new power situation of the UE as a result of that UE power is also shared by the configured uplink of the new activated SCell, and improves the allocation of uplink resources to the UE. Note that, if an activation of a SCell with configured uplink affects the power headroom report, a deactivation of an activated SCell with configured uplink also impacts the power headroom report since less configured uplinks shares the UE power. However, LTE-Advanced system does not clearly specify how the eNB knows about the new power situation due to the deactivation of the activated SCell with configured uplink, to improve the allocation of uplink resources to the UE. Besides, LTE-Advanced system does not specify how the eNB knows the new power situation of the UE upon removal of an activated SCell with configured uplink.

### Summary of the Invention

The application discloses a method of handling power headroom reporting for activated serving cell with configured uplink in a wireless communication system in order to solve the abovementioned problem.

A method of handling power headroom reporting for activated serving cell with configured uplink, for a communication device in a wireless communication system is disclosed. The method comprises triggering a power headroom report for each activated serving cell with configured uplink when an activated serving with configured uplink is deactivated.

A method of handling power headroom reporting for activated serving cell with configured uplink, for a communication device in a wireless communication system is disclosed. The method comprises triggering a power headroom report for each activated serving cell with configured uplink when an activated serving cell with configured uplink is removed.

A communication device of a wireless communication system for handling power headroom reporting for activated serving cell with configured uplink is disclosed. The communication device comprises means for triggering a power headroom report for each activated serving cell with configured uplink when an activated serving cell with configured uplink is deactivated.

A communication device of a wireless communication system for handling power headroom reporting for activated serving cell with configured uplink is disclosed. The communication device comprises means for triggering a power headroom report for each activated serving cell with configured uplink when an activated serving cell with configured uplink is removed.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary wireless communication system.

Fig. 2 is a schematic diagram of a user equipment and multiple cells under an eNB in a wireless communication system in Fig. 1.

Fig. 3 illustrates a schematic diagram of an exemplary communication device.

Fig. 4 is a flowchart of an exemplary process.

### Detailed Description

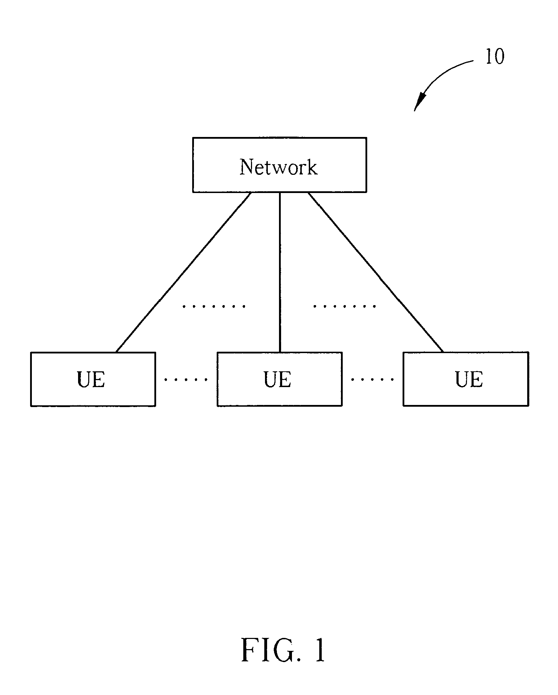

Please refer to Fig. 1, which is a schematic diagram of a wireless communication system 10. The wireless communication system 10 is a Long-Term Evolution advanced (LTE-Advanced) system or other mobile communication systems, and is briefly composed of a network and a plurality of user equipments (UEs). In Fig. 1, the network and the UEs are simply utilized for illustrating the structure of the wireless communication system 10. Practically, the network may be an evolved universal terrestrial radio access network (E-UTRAN) comprising a plurality of evolved base stations (eNBs). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

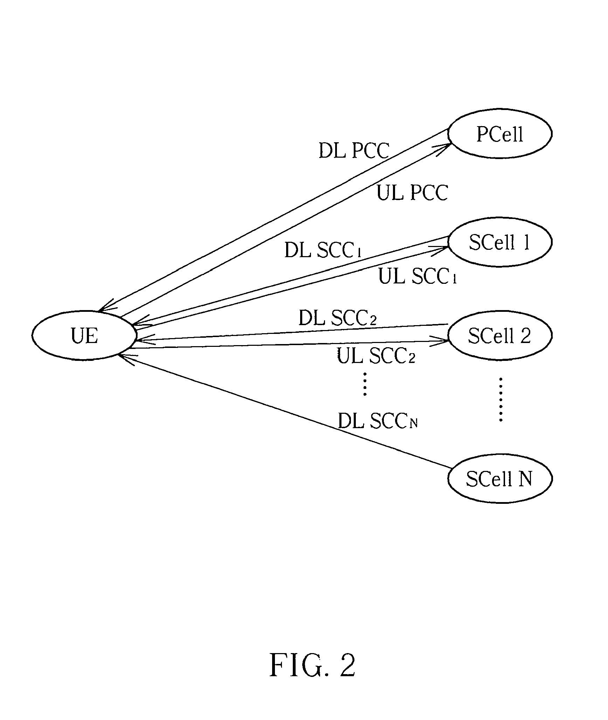

Please refer to Fig. 2, which is a schematic diagram of a UE and multiple cells in the wireless communication system 10. The UE communicates with one primary serving cell (PCell) and several secondary serving cells (SCells), as SCell1-SCellN shown in Fig. 2. In the downlink, the component carrier corresponding to the PCell is the Downlink Primary Component Carrier (DL PCC) while in the uplink it is the Uplink Primary Component Carrier (UL PCC). Depending on UE capabilities, SCells can be configured to form together with the PCell a set of serving cells. In the downlink, the component carrier corresponding to a SCell is a Downlink Secondary Component Carrier (DL SCC) while in the uplink it is an Uplink Secondary Component Carrier (UL SCC). Note that, the PCell is always configured with DL PCC and UL PCC, and the SCell can be configured only with DL SCC.

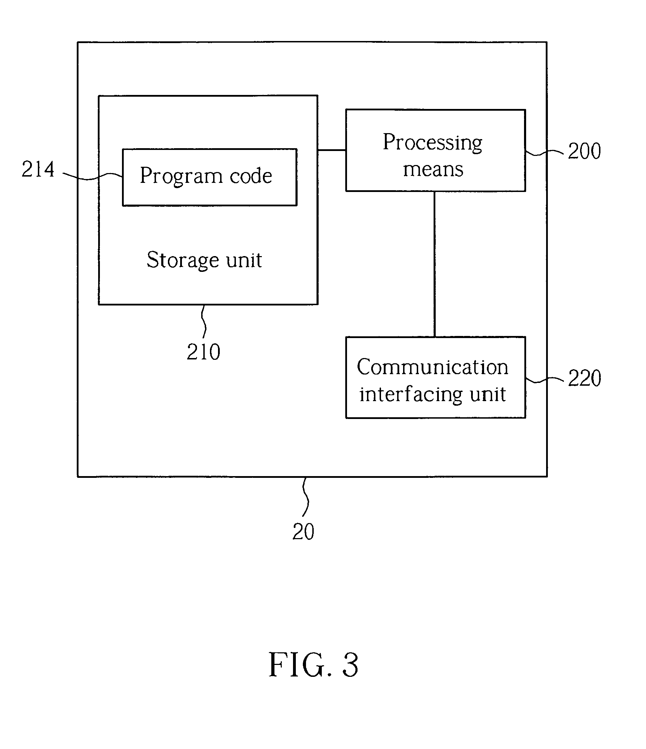

Fig. 3 illustrates a schematic diagram of an exemplary communication device 20. The communication device 20 can be the UE shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

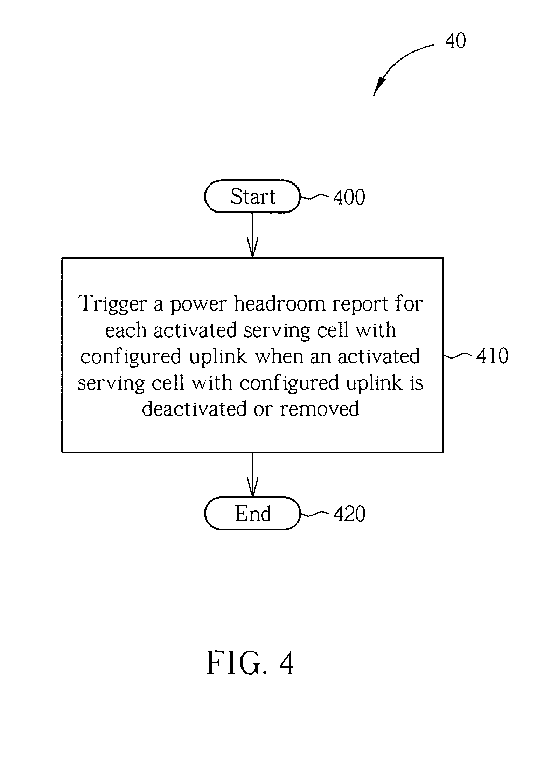

Please refer to Fig. 4, which illustrates a flowchart of an exemplary process 40. The process 40 is utilized in a UE for handling power headroom reporting for activated serving cell with configured uplink. The process 40 can be compiled into the program code 214 and includes the following steps:

Step 400: Start.

Step 410: Trigger a power headroom report for each activated serving cell with configured uplink when an activated serving cell with configured uplink is deactivated or removed.

Step 420: End.

According to the process 40, the UE triggers the power headroom report for each activated serving cell with configured uplink whenever an activated serving cell (e.g. a secondary serving cell) with configured uplink is deactivated or removed. In addition, the UE transmits the power headroom report to the network (e.g. an eNB), so that the eNB can know the new power situation of the UE and correctly allocates uplink resources to the UE. Note that, the new power situation is caused by deactivation of an activated secondary serving cell with configured uplink since configured uplink number is changed, which impacts uplink transmission power of the UE. The detailed description can be referred from above, so it is not given herein.

Take an example based on the process 50. Referring back to Fig. 1, assume secondary serving cells SCell 1 and SCell 2 is activated and is configured with uplink component carriers UL SCC1 and UL SCC2. A power headroom report is triggered for each activated serving cell (e.g. the primary serving cell PCell and the secondary serving cell SCell 1) with configured uplink (e.g. UL PCC and UL SCC1) when an activated secondary serving cell (e.g. the secondary serving cell SCell 2) is deactivated. In addition, the UE transmits the power headroom report for the primary serving cell PCell and secondary serving cell SCell 1 to an eNB. This is useful in improving the eNB's allocation of uplink resources to the UE since deactivation of an activated secondary serving cell with configured uplink impacts power situation of the UE.

In another embodiment, the power headroom report is triggered for the primary serving cell PCell and secondary serving cell SCell 1 when the secondary serving cell SCell 2 is removed since removal of the SCell 2 changes the configured uplink number, which will affects UE power scheduling. In addition, the UE transmits the power headroom report for the primary serving cell PCell and secondary serving cell SCell 1 to eNB.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the present invention provides a method for handling power headroom reporting for activated serving cell with configured uplink. The UE shall trigger power headroom report for each activated serving cell when an activated secondary serving cell with configured uplink is deactivated or removed, so that the network can know new power situation of the UE, and thereby improving the allocation of uplink resources to the UE.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling power headroom reporting for activated serving cell with configured uplink, for a communication device in a wireless communication system, the method comprising:
triggering a power headroom report for each activated serving cell with configured uplink when an activated serving cell with configured uplink is deactivated.

2. The method of claim 1, wherein triggering the power headroom report for each activated serving cell with configured uplink when the activated serving cell with configured uplink is deactivated comprising:
transmitting the power headroom report for each activated serving cell with configured uplink to a network of the wireless communication system when the activated serving cell with configured uplink is deactivated, whereby the network allocates uplink resources to the communication device according to the power headroom report.

3. The method of claim 1, wherein the activated serving cell is an activated secondary serving cell.

4. A method of handling power headroom reporting for activated serving cell with configured uplink, for a communication device in a wireless communication system, the method comprising:
triggering a power headroom report for each activated serving cell with configured uplink when an activated serving cell with configured uplink is removed.

5. The method of claim 4, wherein triggering the power headroom report for each activated serving cell with configured uplink when the activated serving cell with configured uplink is removed comprising:
transmitting the power headroom report for each activated serving cell with configured uplink to a network of the wireless communication system when the activated serving cell with configured uplink is removed, whereby the network allocates uplink resources to the communication device according to the power headroom report.

6. The method of claim 4, wherein the activated serving cell is an activated secondary serving cell.

7. A communication device of a wireless communication system for handling power headroom reporting for activated serving cell with configured uplink, the communication device comprising:
means for triggering a power headroom report for each activated serving cell with configured uplink when an activated serving cell with configured uplink is deactivated.

8. The mobile device of claim 7, wherein the means for triggering the power headroom report for each activated serving cell with configured uplink when the activated serving cell with configured uplink is deactivated comprising:
means for transmitting the power headroom report for each activated serving cell with configured uplink to a network of the wireless communication system when the activated serving cell with configured uplink is deactivated, whereby the network allocates uplink resources to the communication device according to the power headroom report.

9. The mobile device of claim 7, wherein the activated serving cell is an activated secondary serving cell.

10. A communication device of a wireless communication system for handling power headroom reporting for activated serving cell with configured uplink, the communication device comprising:
means for triggering a power headroom report for each activated serving cell with configured uplink when an activated serving cell with configured uplink is removed.

11. The mobile device of claim 10, wherein the means for triggering the power headroom report for each activated serving cell with configured uplink when the activated serving cell with configured uplink is removed comprising:
means for transmitting the power headroom report for each activated serving cell with configured uplink to a network of the wireless communication system when the activated serving cell with configured uplink is removed, whereby the network allocates uplink resources to the communication device according to the power headroom report.

12. The mobile device of claim 10, wherein the activated serving cell is an activated secondary serving cell.
